# EUROPEAN PATENT APPLICATION

(11) **EP 4 791 050 A1**
(43) Date of publication of application: **12.08.2026**
(21) Application number: 26156967.7
(22) Date of filing: 06.02.2026
(51) Int. Cl.: H04W 4/50, H04W 4/80

(54) **COMPUTER-IMPLEMENTED METHOD, MAIN BODY APPARATUS, AND PROGRAM**

(30) Priority: 10.02.2025 JP 2025020134
(71) Applicant: Nintendo Co., Ltd., Kyoto-shi, Kyoto 601-8501 (JP)
(72) Inventor: YASUDA, Shumpei, Kyoto-shi, Kyoto, 601-8501 (JP); TAKEUCHI, Hiroyuki, Kyoto-shi, Kyoto, 601-8501 (JP); KOJIMA, Yohei, Kyoto-shi, Kyoto, 601-8501 (JP)
(74) Representative: Lorenz Seidler Gossel Part. mbB

(57) **Abstract**

A computer-implemented method includes receiving, at a main body apparatus configured to wirelessly communicate with one or more external apparatuses in accordance with BLE (Bluetooth Low Energy) and to hold in advance a list comprising a plurality of GATT (Generic Attribute Profile) databases, first information from a first external apparatus that has not communicated with the main body apparatus, identifying, at the main body apparatus, a GATT database corresponding to the first information from the plurality of GATT databases based on the first information, and wirelessly communicating, at the main body apparatus, with the first external apparatus based on the identified GATT database.

## Description

The present disclosure relates to a communication processing program, a communication processing method, and a communication system.

### INTRODUCTION

In Bluetooth Low Energy (BLE), which is one communication mode of Bluetooth^{®}, a communication technique using a GATT (Generic Attribute Profile) connection is sometimes adopted (see, for example, Japanese Patent Laid-Open No. 2017-199991).

### SUMMARY

There is a desire to make acquisition of a GATT database efficient.

(Configuration 1) According to the present embodiment, a communication processing program executed by a computer of a main body apparatus configured to wirelessly communicate with one or more external apparatuses in accordance with BLE (Bluetooth Low Energy) is provided. The main body apparatus is configured to hold in advance a list comprising a plurality of GATT (Generic Attribute Profile) databases. The communication processing program causes the computer to execute a step of receiving first information from a first external apparatus that has not communicated with the main body apparatus, a step of identifying a GATT database corresponding to the first information from the plurality of GATT databases based on the first information, and a step of wirelessly communicating with the first external apparatus based on the identified GATT database.

(Configuration 2) In Configuration 1, the list may comprise a plurality of types of GATT databases for at least one type of external apparatus.

(Configuration 3) In Configuration 1 or 2, the first information may comprise a hash value calculated from a GATT database of the first external apparatus.

(Configuration 4) In any one of Configurations 1 to 3, the list may comprise one or more types of GATT databases for each of a plurality of types of external apparatuses.

(Configuration 5) In any one of Configurations 1 to 4, the external apparatus may comprise a game controller.

(Configuration 6) In any one of Configurations 1 to 5, the communication processing program may further cause the computer to execute a step of transmitting designation information for specifying a protocol for identifying the GATT database to the first external apparatus. The first external apparatus may generate the first information based on the designation information.

(Configuration 7) In any one of Configurations 1 to 6, the first external apparatus may transmit at least one candidate for a protocol for the main body apparatus to identify the GATT database to the main body apparatus. The communication processing program may further cause the computer to execute a step of generating the designation information based on the at least one candidate for a protocol from the first external apparatus.

(Configuration 8) In any one of Configurations 1 to 7, the communication processing program may further cause the computer to execute a step of specifying a UUID (universally unique identifier) and requesting information on a characteristic included in the GATT database of the first external apparatus.

(Configuration 9) In Configuration 8, the step of requesting information on a characteristic may be executed based on information included in an advertising packet transmitted by the first external apparatus.

(Configuration 10) In any one of Configurations 1 to 9, the main body apparatus may be configured to be capable of adding a new protocol while at least maintaining a protocol for identifying the GATT database held in advance.

(Configuration 11) In any one of Configurations 1 to 10, the list may comprise a plurality of types of GATT databases for each of a plurality of types of external apparatuses.

(Configuration 12) In any one of Configurations 1 to 10, the list may comprise a plurality of types of GATT databases for each of a plurality of types of external apparatuses. The communication processing program may further cause the computer to execute a step of transmitting designation information for specifying a protocol for identifying the GATT database to the first external apparatus. The first external apparatus may generate the first information based on the designation information.

(Configuration 13) According to the present embodiment, a communication processing method executed by a computer of a main body apparatus configured to wirelessly communicate with one or more external apparatuses in accordance with BLE is provided. The main body apparatus is configured to hold in advance a list comprising a plurality of GATT databases. The communication processing method includes a step of receiving first information from a first external apparatus that has not communicated with the main body apparatus, a step of identifying a GATT database corresponding to the first information from the plurality of GATT databases based on the first information, and a step of wirelessly communicating with the first external apparatus based on the identified GATT database.

(Configuration 14) According to the present embodiment, a main body apparatus is provided. The main body apparatus is configured to wirelessly communicate with a first external apparatus in accordance with BLE. The main body apparatus is configured to hold in advance a list comprising a plurality of GATT databases. The main body apparatus receives first information from a first external apparatus that has not communicated with the main body apparatus, identifies a GATT database corresponding to the first information from the plurality of GATT databases based on the first information, and wirelessly communicates with the first external apparatus based on the identified GATT database.

(Configuration 15) According to the present embodiment, a communication processing method in a communication system comprising a main body apparatus and one or more external apparatuses is provided. The main body apparatus is configured to hold in advance a list comprising a plurality of GATT databases. The communication processing method includes a step of establishing a wireless connection in accordance with BLE between the main body apparatus and a first external apparatus that has not communicated with the main body apparatus, a step of the main body apparatus receiving first information from the first external apparatus, a step of identifying a GATT database corresponding to the first information from the plurality of GATT databases based on the first information, and a step of the main body apparatus and the first external apparatus wirelessly communicating based on the identified GATT database.

(Configuration 16) A communication system according to the present embodiment comprises a main body apparatus, and one or more external apparatuses configured to wirelessly communicate with the main body apparatus in accordance with BLE. The main body apparatus is configured to hold in advance a list comprising a plurality of GATT databases. The main body apparatus receives first information from a first external apparatus that has not communicated with the main body apparatus, identifies a GATT database corresponding to the first information from the plurality of GATT databases based on the first information, and wirelessly communicates with the first external apparatus based on the identified GATT database.

The foregoing and other objects, features, aspects, and advantages of the present disclosure will become more apparent from the following detailed description of the present disclosure when taken in conjunction with the accompanying drawings.

### BRIEF DESCRIPTION OF THE DRAWINGS

FIG. 1 shows an exemplary illustrative non-limiting drawing showing a configuration example of a communication system according to the present embodiment.
FIG. 2 shows an exemplary illustrative non-limiting drawing for explaining an example of an operation instruction method and a response method between a main body apparatus and a controller in ATT.
FIG. 3 shows an exemplary illustrative non-limiting drawing showing a structure example of GATT.
FIG. 4 shows an exemplary illustrative non-limiting sequence chart showing an example of a processing procedure of service discovery.
FIG. 5 shows an exemplary illustrative non-limiting drawing showing an example of a database held by a client of a communication system according to the present embodiment.
FIGS. 6A and 6B show exemplary illustrative non-limiting drawings for explaining an example of update processing in a main body apparatus and a controller in a communication system according to the present embodiment.
FIG. 7 shows an exemplary illustrative non-limiting flowchart showing an example of database identification processing of a communication system according to the present embodiment.

### DETAILED DESCRIPTION

The present embodiment will be described in detail with reference to the drawings. Note that the same or corresponding parts in the drawings are denoted by the same reference numerals, and description thereof will not be repeated.

### [A. Configuration Example of Communication System]

First, a configuration example of a communication system 1 according to the present embodiment will be described. The communication system 1 includes a plurality of devices capable of wireless communication in accordance with BLE. Below, as an example, a configuration in which the communication system 1 is applied to a game system will be described.

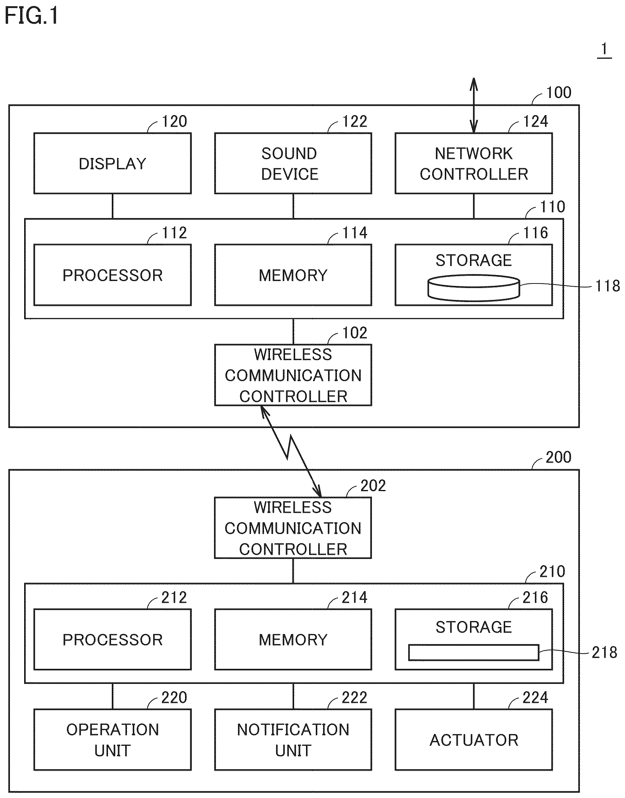

FIG. 1 is a schematic diagram showing a configuration example of the communication system 1 according to the present embodiment. Referring to FIG. 1, the communication system 1 includes a main body apparatus 100 that executes a game application, and a controller 200 that is a game controller. The communication system 1 may include a plurality of main body apparatuses 100, or may include a plurality of controllers 200. The controller 200 may be, for example, a handheld controller used by being lifted, or may be a mouse. The controller 200 may be attachable to and detachable from the main body apparatus 100, or may not be attachable.

For example, one main body apparatus 100 may perform wireless communication with a plurality of controllers 200 concurrently. One controller 200 may be capable of wireless communication with each of a plurality of different main body apparatuses 100.

The main body apparatus 100 includes a wireless communication controller 102. The controller 200 includes a wireless communication controller 202. The wireless communication controller 102 of the main body apparatus 100 is capable of wireless communication in accordance with BLE with the wireless communication controller 202 of the controller 200. The main body apparatus 100 may operate as a central device. The controller 200 may operate as a peripheral.

The main body apparatus 100 may include a plurality of wireless communication controllers, and the controller 200 may include a plurality of wireless communication controllers.

Each of the main body apparatus 100 and the controller 200 may store pairing information in a storage or the like. The pairing information includes, for example, an address of a device with which wireless communication has been performed, and a common key corresponding to each address.

The controller 200 holds a GATT database. In the following description, the GATT database is simply referred to as a "database". The controller 200 provides data including a part or all of the database in response to a request from the main body apparatus 100. The main body apparatus 100 uses the data provided by the controller 200. The mechanism of GATT is based on a data communication method of a server-client system. In the configuration example shown in FIG. 1, the controller 200 operates as a server, and the main body apparatus 100 operates as a client. The main body apparatus 100, which is the client, transmits a request to the controller 200, which is the server, in order to acquire necessary data.

The main body apparatus 100 is an example of a computer. The main body apparatus 100 further includes, for example, a control unit 110, a display 120, a sound device 122, and a network controller 124.

The control unit 110 includes, for example, a processor 112, a memory 114, and a storage 116. Note that a storage device or storage medium such as the memory 114 or the storage 116 may be referred to as "memory".

The processor 112 is a processing entity for executing processing provided by the main body apparatus 100. The processor 112 may be, for example, a CPU (Central Processing Unit), a GPU (Graphics Processing Unit), and the like. The processor 112 performs processing as described later by loading a system program or an application program stored in the storage 116 into the memory 114 and executing the same. The system program may include a communication processing program for performing processing as described later.

The memory 114 is a storage device or storage medium accessible by the processor 112. The memory 114 may be, for example, a volatile storage device such as a DRAM (Dynamic Random Access Memory) or an SRAM (Static Random Access Memory).

The storage 116 stores system programs and application programs. The storage 116 may be, for example, a non-volatile storage medium such as a hard disk or a flash memory. The storage 116 may be, for example, a storage medium attachable to and detachable from the main body apparatus 100, such as an optical disk or a cartridge. A device may be provided by combining the main body apparatus 100 and a storage medium.

The storage 116 may store a list 118 including a plurality of databases. In this way, the main body apparatus 100 is capable of holding in advance the list 118 including a plurality of databases. For example, the list 118 may be stored in the storage 116 at the time of manufacture of the main body apparatus 100, or may be stored in the storage 116 at the time of update of the system program. It is sufficient that the list 118 is prepared before the main body apparatus 100 establishes a wireless connection with the controller 200. Details of the list 118 will be described later.

The display 120 displays an image based on a processing result by the processor 112 and the like.

The sound device 122 may include, for example, at least one of a microphone or a speaker.

The network controller 124 is responsible for communication with other apparatuses via a network not shown.

The controller 200 further includes, for example, a control unit 210, an operation unit 220, a notification unit 222, and an actuator 224.

The control unit 210 includes, for example, a processor 212, a memory 214, and a storage 216. The processor 212, the memory 214, and the storage 216 are similar to the processor 112, the memory 114, and the storage 116 described above, respectively.

The storage 216 may store a database 218. The operation unit 220 receives a user operation on the controller 200. The operation unit 220 may be, for example, a directional pad, a button, a lever, a stick, and the like. Information indicating the user operation received by the operation unit 220 may be transmitted to the main body apparatus 100 by wireless communication.

The notification unit 222 includes one or more devices for notifying a user. The notification unit 222 may be, for example, a visible device such as an LED, and/or an audio device such as a speaker, a buzzer, and the like.

The actuator 224 may be, for example, a device that gives tactile information to a user, such as a vibrator or an electrothermal element.

The main body apparatus 100 and the controller 200 may be capable of various wireless communications such as ZigBee^{®}, wireless LAN (IEEE 802.11), and infrared communication.

### [B. GATT]

Next, GATT in BLE will be described.

In BLE, a data communication method of a server-client system called ATT (Attribute Protocol) is adopted. In ATT, data is represented by a structure called "Attribute". An Attribute includes a type (Type), a handle (Handle), and a value (Value). In the type, a 128-bit UUID (universally unique identifier) may be stored as an identifier. In the handle, a 16-bit identifier may be stored. In the value, arbitrary data may be stored.

An operation instruction method for an Attribute and a response method to an operation instruction are defined as follows.
(1) Request and Response
(2) Command
(3) Notification
(4) Indication and Confirmation

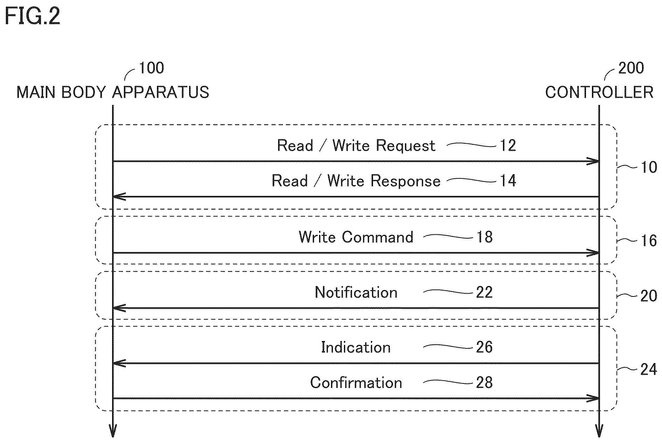

FIG. 2 is a diagram for explaining an example of an operation instruction method and a response method between the main body apparatus 100 and the controller 200 in ATT.

Referring to FIG. 2, as an example of (1) Request and Response, an example is shown in which the main body apparatus 100 transmits a Request 12 for Read or Write to the controller 200, and the controller 200 transmits a Response 14 for Read or Write to the main body apparatus 100 (bidirectional communication 10).

As an example of (2) Command, an example is shown in which the main body apparatus 100 transmits a Command 18 for writing to the controller 200 (unidirectional communication 16). The Command 18 is an operation instruction from the main body apparatus 100.

As an example of (3) Notification, an example is shown in which the controller 200 transmits a Notification 22 to the main body apparatus 100 (unidirectional communication 20). The Notification 22 is a response from the controller 200.

As an example of (4) Indication and Confirmation, an example is shown in which the controller 200 transmits an Indication 26 to the main body apparatus 100, and the main body apparatus 100 transmits a Confirmation 28 to the controller 200 (bidirectional communication 24).

GATT is a profile that defines a usage method of ATT. GATT represents functions provided by a server in a hierarchical structure.

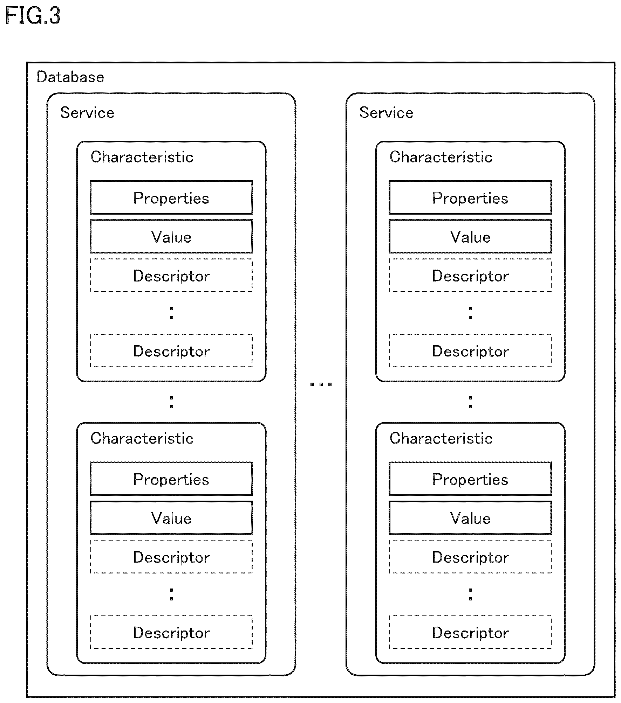

FIG. 3 is a schematic diagram showing a structure example of GATT. Referring to FIG. 3, a GATT database includes definitions of one or more services (Service). Each of the services groups together data and behavior for a specific function (for example, battery service).

Each service includes one or more characteristics (Characteristic). Each characteristic includes information regarding one property (for example, battery level) included in the service to which it belongs.

Each characteristic includes properties (Properties) and a value (Value). The properties indicate an operation method (for example, Read or Write) of the value. In the value, a value of the property to which it belongs is stored. Each characteristic may include one or more descriptors (Descriptor). In the descriptor, a setting value of the characteristic to which it belongs is stored.

Each service can also include one or more other services. Each of the service, characteristic, value, and descriptor constituting GATT is represented as an Attribute (including a type, a handle, and a value) in accordance with ATT, for example, as follows.
(1) Service Definition
   - Type (for example, UUID): Predefined value indicating a service definition
   - Handle: 0x0001
   - Value: 16-bit or 128-bit predefined value
(2) Characteristic Definition
   - Type (for example, UUID): Predefined value indicating a characteristic definition
   - Handle: 0x0002
   - Value: Operation method (in the case of property), 16-bit or 128-bit predefined value (in the case of characteristic), Attribute handle of Attribute holding actual value (in the case of characteristic value Attribute handle)
(3) Value Definition
   - Type (for example, UUID): Same value as value included in characteristic definition
   - Handle: 0x0003
   - Value: Actual value
(4) Descriptor Definition
   - Type (for example, UUID): 16-bit or 128-bit predefined value
   - Handle: 0x0004
   - Value: Actual value

### [C. Service Discovery]

In order to acquire a database held by a server as described above, processing of service discovery may be executed between a client and the server. Service discovery includes operations for determining what kind of function a device is a server for, and acquiring what information is necessary to use the function.

For example, among the operations shown in FIG. 2 described above, the operation of Read can be instructed by specifying a UUID set as a type, but for other operations, specification of an Attribute handle is necessary. Usually, since an Attribute handle is not a predefined value defined in the specifications of an Attribute, it can be changed by addition or deletion of a service definition of a database.

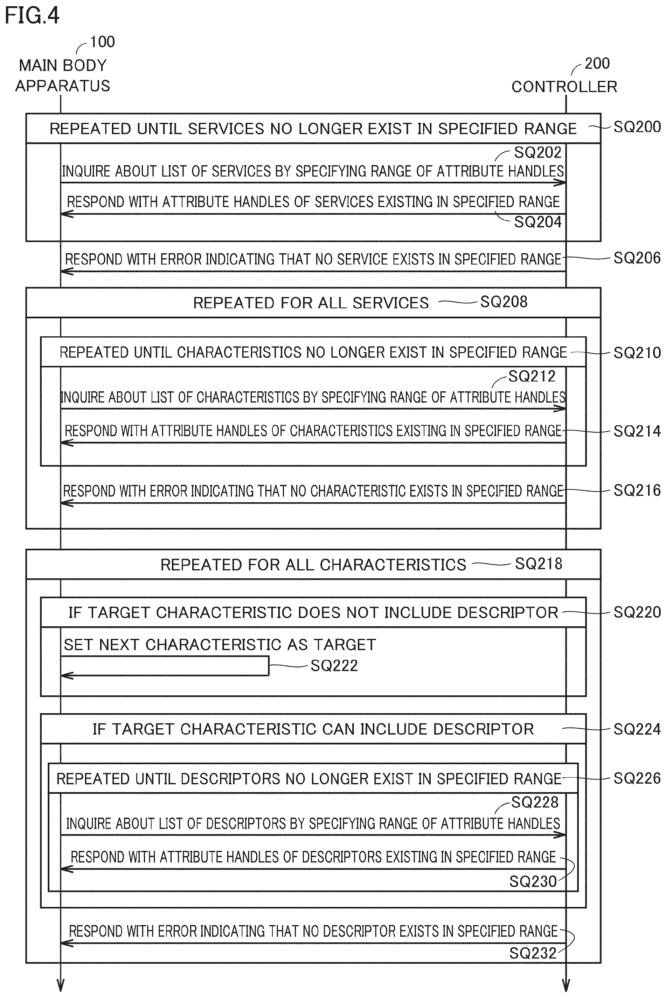

FIG. 4 is a sequence chart showing an example of a processing procedure of service discovery. Referring to FIG. 4, the following processing is repeated until services no longer exist in a specified range (sequence SQ200). Specifically, the main body apparatus 100 inquires about a list of services by specifying a range of Attribute handles (sequence SQ202). The controller 200 responds with Attribute handles of services existing in the specified range (sequence SQ204).

If no service exists in the specified range, the controller 200 responds with an error indicating that no service exists in the specified range (sequence SQ206).

Subsequently, the following processing is repeated for all services based on the responded Attribute handles of the services (sequence SQ208).

In the sequence SQ208, the following processing is repeated until characteristics no longer exist in a specified range (sequence SQ210). Specifically, the main body apparatus 100 inquires about a list of characteristics by specifying a range of Attribute handles (sequence SQ212). The controller 200 responds with Attribute handles of characteristics existing in the specified range (sequence SQ214).

If no characteristic exists in the specified range, the controller 200 responds with an error indicating that no characteristic exists in the specified range (sequence SQ216).

Subsequently, the following processing is repeated for all characteristics based on the responded Attribute handles of the characteristics (sequence SQ218). Specifically, it is determined whether or not a target characteristic includes a descriptor.

If the target characteristic does not include a descriptor (sequence SQ220), the main body apparatus 100 sets the next characteristic as a target (sequence SQ222).

If the target characteristic can include a descriptor (sequence SQ224), the following processing is repeated until descriptors no longer exist in a specified range based on the responded Attribute handle of the characteristic (sequence SQ226). Specifically, the main body apparatus 100 inquires about a list of descriptors by specifying a range of Attribute handles (sequence SQ228). The controller 200 responds with Attribute handles of descriptors existing in the specified range (sequence SQ230).

If no descriptor exists in the specified range, the controller 200 responds with an error indicating that no descriptor exists in the specified range (sequence SQ232).

As described above, in service discovery, for example, services included in a database, characteristics included in each service, and descriptors included in each characteristic may be acquired hierarchically in this order. However, the execution order of processing is not limited to the above, and may be changed as appropriate.

### [D. Database Identification Processing]

Next, in the communication system 1 according to the present embodiment, database identification processing described below can be executed in order to reduce time required for the above-described service discovery.

The main body apparatus 100 holds the list 118 (see FIG. 1). The list 118 includes databases of various controllers with which the main body apparatus 100 is expected to wirelessly communicate.

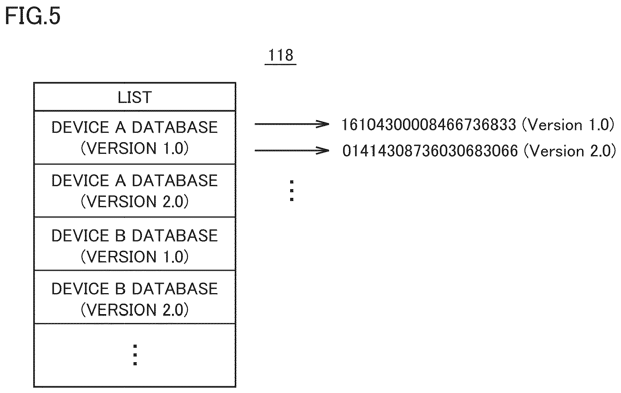

FIG. 5 is a schematic diagram showing an example of the list 118 held by the main body apparatus 100 of the communication system 1 according to the present embodiment.

Referring to FIG. 5, the list 118 includes a plurality of databases. The list 118 may include databases of all types of controllers with which the main body apparatus 100 is expected to wirelessly communicate. Note that entities of databases do not need to be collected in one list 118, and the list 118 may be one that manages information for identifying the location of each database.

In the communication system 1, information for identifying each database is used. The information for identifying each database is used, for example, to determine a match between the database 218 held by the controller 200 and a database included in the list 118. As the information for identifying each database, identification information calculated from each database (for example, a hash value) may be used, or unique information associated in advance with each database may be used. Alternatively, as the information for identifying each database, information such as the type and version of the controller 200 may be used. When a hash value is used as the information for identifying each database, the hash value may be calculated from each database each time. Note that in the list 118, a hash value calculated in advance from each database may be associated with each database. When a hash value is calculated from a database, the calculated hash value may be saved as a cache.

Several versions may exist for a protocol of database identification processing (hereinafter abbreviated as "protocol"). For example, a calculation algorithm of a hash value may be different for each version of the protocol. FIG. 5 shows, as an example, a case where hash values are respectively calculated in accordance with calculation algorithms of two versions (for example, Version 1.0 and 2.0). In the database identification processing, a hash value may be calculated in accordance with a specified protocol. Note that the protocol may be only a single version.

The controller 200 may support a plurality of versions regarding the protocol. For example, the controller 200 may support at least two versions. As an example, the two versions may include at least an initial version. For example, the initial version may be a version that the controller 200 supports consistently from the start of mass production of the main body apparatus 100. The controller 200 may support the initial version at the time of shipment. The controller 200 may support the latest version at the time of manufacture at the shipment stage, or may become capable of supporting the latest version by connecting to the Internet or connecting to another device such as the main body apparatus 100 after shipment.

The list 118 may include one or more types of databases for each of a plurality of types of controllers 200. The list 118 may include a plurality of types of databases for at least one type of controller 200.

The list 118 shown in FIG. 5 includes, as an example, a "device A database" representing functions provided by a controller 200 of a certain type (for example, device A), and a "device B database" representing functions provided by a controller 200 of another type (for example, device B).

Further, there may be cases where a plurality of types exist for a system program installed in one type of controller 200. The list 118 shown in FIG. 5 includes, as an example, two types with different versions as the "device A database" representing functions provided by a certain type of controller 200. Regarding the "device B database" as well, two types with different versions exist.

For convenience of description, the list 118 shown in FIG. 5 shows an example including a plurality of types of databases for each of a plurality of types of controllers 200, but the list 118 may include only one type of database for only one type of controller 200, may include a plurality of types of databases for only one type of controller 200, or may include only one type of database for each of a plurality of types of controllers. Due to update of the system program of the main body apparatus 100 or specified processing, databases registered in the list 118 may be added, changed, or deleted.

Hereinafter, updates of the list 118 of the main body apparatus 100, the protocol supported by the main body apparatus 100, the database 218 of the controller 200, the protocol supported by the controller 200 and the like will be described. Note that the system program may be referred to as firmware.

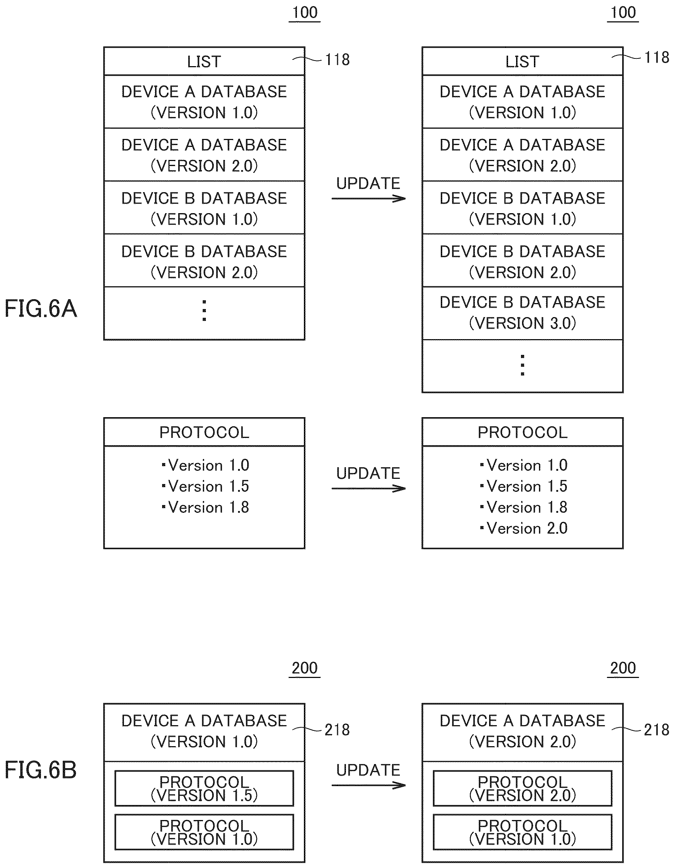

FIGS. 6A and 6B are diagrams for explaining an example of update processing in the main body apparatus 100 and the controller 200 in the communication system 1 according to the present embodiment.

FIG. 6A shows, as an example, a configuration in which the list 118 and the supported protocol are updated by updating the system program of the main body apparatus 100.

As an example, by updating the system program of the main body apparatus 100, a database of another version of the device A may be added to the list 118, and a database of another version of the device B may be added.

Also, regarding the protocol supported by the main body apparatus 100, another version may be added. In the example shown in FIG. 6A, "Version 1.0" is the initial version, and "Version 2.0" is newly added. Note that the other version may be the latest version in the main body apparatus 100.

For convenience of description, update of the list 118 of the main body apparatus 100 and update of the protocol supported by the main body apparatus 100 have been described collectively, but by the update of the system program of the main body apparatus 100, only one of the update of the list 118 or the update of the protocol may be executed.

Further, update (for example, addition, change, deletion, and the like) of the database included in the list 118 is not limited to the update of the system program, and can be performed by an any appropriate method. For example, the main body apparatus 100 may download the database via the Internet or the like. The main body apparatus 100 may download a database of a wirelessly connected controller 200 from the controller 200 and register it in the list 118. Only a part of databases newly acquired by the main body apparatus 100 by update or download of the system program may be registered in the list 118. Among databases registered in the list 118, those satisfying a specified condition may be deleted.

The update of the protocol may be executed together with the update of the database included in the list 118, or may be executed independently of each other.

The main body apparatus 100 may be capable of adding a new protocol while at least maintaining a protocol supported in advance (for example, the initial version). For example, a new protocol may become available by updating the system program of the main body apparatus 100. At this time, a protocol that was available before the update may also be maintained available without being discarded. For example, in the example shown in FIG. 6A, the main body apparatus 100 may support only the initial version and the latest version ("Version 1.8" before update or "Version 2.0" after update in the example shown in FIG. 6A) as protocols, or may also support a version different from the initial version and the latest version. By making it possible to add a new protocol, security performance and processing performance can be improved. Note that the main body apparatus 100 may maintain only the initial version without performing addition of a protocol and the like. Alternatively, when a new protocol is added, the main body apparatus 100 may maintain only the added protocol.

FIG. 6B shows, as an example, an example in which the system program of the controller 200 is updated. As an example, the controller 200 belongs to the type of device A. When functions provided by the controller 200 are updated by updating the system program of the controller 200, the database 218 may also be updated together. In the example shown in FIG. 6B, the database 218 of the controller 200 is updated from "Version 1.0" to "Version 2.0".

Note that the new database 218 of the controller 200 does not have to be included in the system program. For example, the controller 200 may download the new database 218 via the Internet or the like, or may acquire the new database 218 from the main body apparatus 100. Also, the new system program of the controller 200 may be downloaded via the Internet or the like, or may be provided from the main body apparatus 100.

The controller 200 may hold only the database 218 acquired most recently, or may also hold other databases 218 together. For example, when acquiring a new database 218, the controller 200 may discard the database 218 held before the acquisition, or may continue the holding.

Also, regarding the protocol supported by the controller 200, another version may be added. In the example shown in FIG. 6B, "Version 1.0" is the initial version, and "Version 2.0" is newly added.

For convenience of description, update of the database 218 of the controller 200 and update of the protocol supported by the controller 200 have been described collectively, but by the update of the system program of the controller 200, only one of the update of the database 218 or the update of the protocol may be executed. The update of the protocol may be executed together with the update of the database 218, or may be executed independently of each other.

The controller 200 may be capable of adding a new protocol while at least maintaining a protocol supported in advance (for example, the initial version). For example, in the example shown in FIG. 6B, the controller 200 may support only the initial version and the latest version ("Version 1.5" before update or "Version 2.0" after update in the example shown in FIG. 6B) as protocols, or may also support a version different from the initial version and the latest version.

Since updates of the main body apparatus 100 and the controller 200 can be executed independently, the database and the protocol are selected as appropriate according to the situation. Referring to FIGS. 6A and 6B, some examples will be described.

### (1) Wireless connection between main body apparatus 100 before update and controller 200 before update

In a case where the main body apparatus 100 before update (state on the left side of FIG. 6A) and the controller 200 before update (state on the left side of FIG. 6B) establish a wireless connection, the controller 200 holds the "device A database" of "Version 1.0" as the database 218. Since the main body apparatus 100 already holds the same database, it is not necessary to acquire the database from the controller 200. Also, since both the main body apparatus 100 and the controller 200 support the protocol of "Version 1.5", the database identification processing is executed in accordance with the latest protocol in the controller 200.

### (2) Wireless connection between main body apparatus 100 before update and controller 200 after update

In a case where the main body apparatus 100 before update and the controller 200 after update (state on the right side of FIG. 6B) establish a wireless connection, since the main body apparatus 100 already holds the same database as the database 218 of the controller 200 ("device A database" of "Version 2.0"), it is not necessary to acquire the database from the controller 200. On the other hand, since the main body apparatus 100 does not support "Version 2.0" which is the latest version supported by the controller 200, the database identification processing is executed in accordance with the protocol of "Version 1.0" which is the initial version.

### (3) Case where main body apparatus 100 after update and controller 200 before update wirelessly connect

In a case where the main body apparatus 100 after update (state on the right side of FIG. 6A) and the controller 200 before update establish a wireless connection, since the main body apparatus 100 already holds the same database as the database 218 of the controller 200 ("device A database" of "Version 1.0"), it is not necessary to acquire the database from the controller 200. Also, since both the main body apparatus 100 and the controller 200 support the protocol of "Version 1.5", the database identification processing is executed in accordance with the latest protocol in the controller 200.

### (4) Case where main body apparatus 100 after update and controller 200 after update wirelessly connect

In a case where the main body apparatus 100 after update and the controller 200 after update establish a wireless connection, since the main body apparatus 100 already holds the same database as the database 218 of the controller 200 ("device A database" of "Version 2.0"), it is not necessary to acquire the database from the controller 200. Also, since both the main body apparatus 100 and the controller 200 support the protocol of "Version 2.0", the database identification processing is executed in accordance with the latest protocol in the controller 200.

Since the list 118 includes databases for respective versions of various servers with which wireless communication is expected, even if the main body apparatus 100 wirelessly communicates with a controller 200 with which the main body apparatus 100 has not wirelessly communicated, the possibility of having acquired in advance a database that the main body apparatus 100 would hold can be increased.

The controller 200 may hold a database 218 including a characteristic definition indicating that it supports the database identification processing. For example, in the characteristic definition, a UUID unique to the database identification processing is set as a type. Also, the characteristic may hold correspondence information as a value. The correspondence information may include, for example, a version of a protocol supported by the controller 200.

As described above, since the operation of Read can be requested by specifying a UUID, the main body apparatus 100 transmits a request for Read to the controller 200 by specifying the UUID unique to the database identification processing. If the controller 200 supports the database identification processing, the controller 200 responds with correspondence information (for example, a version of a supported protocol) of a characteristic corresponding to the specified UUID and the like. On the other hand, if the controller 200 does not support the database identification processing, the controller 200 responds with an error. The main body apparatus 100 can determine whether or not the controller 200 supports the database identification processing based on the response from the controller 200.

By including such a characteristic in the database, the main body apparatus 100 identifies a database to be used by the above-described database identification processing for a controller 200 supporting the database identification processing, and acquires a database by normal service discovery for a controller 200 not supporting the database identification processing.

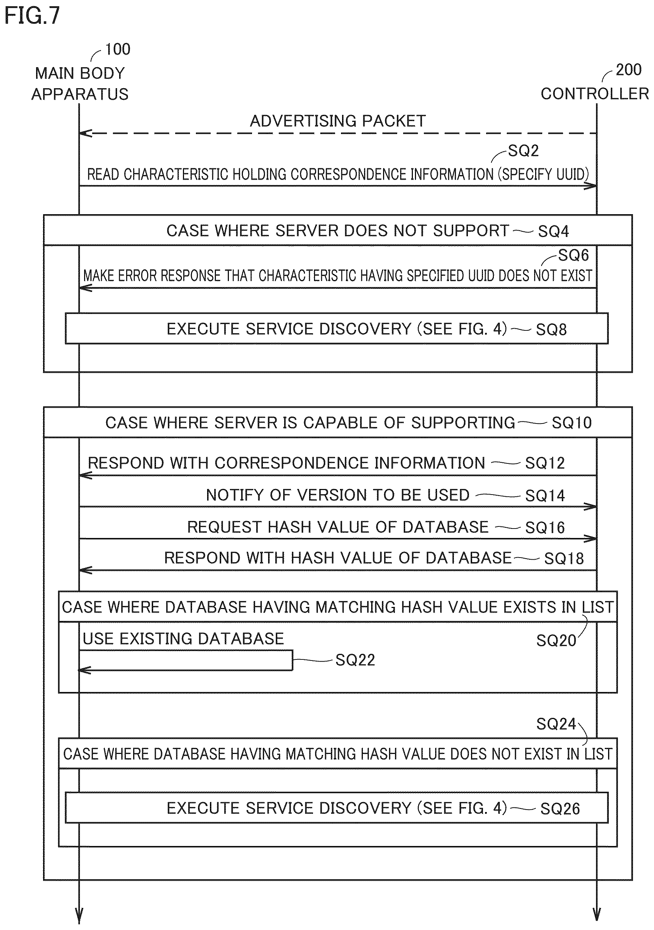

FIG. 7 is a sequence chart showing an example of database identification processing of the communication system 1 according to the present embodiment. The processing executed by the main body apparatus 100 shown in FIG. 7 may be implemented by the processor 112 of the main body apparatus 100 executing a system program and the like. Similarly, the processing executed by the controller 200 may be implemented by the processor 212 of the controller 200 executing a system program and the like.

Referring to FIG. 7, it is assumed that a wireless connection between the main body apparatus 100 and the controller 200 is established. The main body apparatus 100 may establish a wireless connection with the controller 200 by receiving an advertising packet from the controller 200 operating as a peripheral and transmitting a request for connection to the controller 200.

When the controller 200 is capable of supporting the database identification processing, the advertising packet broadcast by the controller 200 may include information indicating that it is capable of supporting the database identification processing. The sequence SQ2 may be executed based on the information indicating that it is capable of supporting the database identification processing included in the advertising packet.

The main body apparatus 100 transmits a request for Read to the controller 200 by specifying a UUID unique to the characteristic holding the correspondence information (sequence SQ2). That is, the main body apparatus 100 specifies the UUID and requests information on the characteristic included in the database 218 of the controller 200 from the controller 200.

If the controller 200 does not support the database identification processing (sequence SQ4), the controller 200 makes an error response that a characteristic having the specified UUID does not exist (sequence SQ6). In this case, processing of service discovery shown in FIG. 4 is executed between the main body apparatus 100 and the controller 200.

On the other hand, if the controller 200 is capable of supporting the database identification processing (sequence SQ10), the controller 200 responds with the correspondence information held by the characteristic having the specified UUID to the main body apparatus 100 (sequence SQ12).

For example, the controller 200 may respond with a version of one or more supported protocols to the main body apparatus 100. As an example, the correspondence information may include information on a version different from the initial version supported by the controller 200. As described above, when the controller 200 supports the initial version and the latest version, the version different from the initial version is the latest version in the controller 200. The correspondence information may include information on the initial version. In this way, the controller 200 transmits at least one candidate for a protocol to the main body apparatus 100.

The main body apparatus 100 notifies the controller 200 of a version to be used in the current communication based on the correspondence information from the controller 200 (sequence SQ14). The main body apparatus 100 transmits information for specifying a protocol to the controller 200. At this time, the main body apparatus 100 may generate the information for specifying a protocol based on the at least one candidate for a protocol from the controller 200. For example, if the main body apparatus 100 supports a version different from the initial version included in the correspondence information from the controller 200, the main body apparatus 100 selects the version different from the initial version, and otherwise, selects the initial version.

In this way, since the main body apparatus 100 determines a version to be used from among a plurality of versions supported by the controller 200, even if a protocol and the like are added or changed, it does not affect processing of the entire communication system 1. Also, in the selection of a version, since a version different from the initial version is preferentially selected, processing is executed in accordance with a protocol of as new a version as possible.

Subsequently, the main body apparatus 100 requests information for identifying the database 218 of the controller 200 from the controller 200. As an example, the main body apparatus 100 requests a hash value of the database from the controller 200 (sequence SQ16).

In accordance with the request from the main body apparatus 100, the controller 200 calculates a hash value from the database 218 of the controller 200 in accordance with a protocol of the specified version, and responds with the calculated hash value to the main body apparatus 100 (sequence SQ18). In this way, the information for identifying the database 218 of the controller 200 may include a hash value calculated from the database 218 of the controller 200.

As a modification, the information for identifying the database 218 of the controller 200 may include information identifying the type and version of the controller 200. By using the information identifying the type of the controller 200, search time for the list 118 can be shortened.

The main body apparatus 100 determines whether or not a database having a hash value matching the hash value responded by the controller 200 exists in the list 118.

If a database having a hash value matching the hash value responded by the controller 200 exists in the list 118 (sequence SQ20), the main body apparatus 100 uses the database whose hash value matches as a database held by the main body apparatus 100 (sequence SQ22). At this time, service discovery is skipped, and service discovery is not executed.

Even if it is a controller 200 with which communication has not been performed in the past, the main body apparatus 100 can use the database 218 held by the controller 200 without performing service discovery. That is, the main body apparatus 100 receives the hash value from the controller 200, and based on the received hash value, identifies a database corresponding to the received hash value from the plurality of databases included in the list 118. The main body apparatus 100 wirelessly communicates with the controller 200 based on the identified database.

If a database having a hash value matching the hash value responded by the controller 200 does not exist in the list 118 (sequence SQ24), processing of service discovery shown in FIG. 4 is executed between the main body apparatus 100 and the controller 200 (sequence SQ26).

The processing of the sequences SQ24 and SQ26 can be executed in the following cases. For example, in a configuration in which a system program and the like of the controller 200 is updatable by update data provided from the main body apparatus 100, it is a case where after the system program of the controller 200 is updated by update data from a certain main body apparatus 100, another main body apparatus 100 in which a system program of a version prior to that main body apparatus 100 is installed wirelessly communicates with the controller 200. In such a case, it is also assumed that the database held by the controller 200 is not included in the list 118 of the other main body apparatus 100.

Note that when it is known in advance that the database identification processing is supported between the main body apparatus 100 and the controller 200, information indicating that it is capable of supporting the database identification processing does not have to be transmitted. The information indicating that it is capable of supporting the database identification processing may be transmitted by a method other than the advertising packet. The main body apparatus 100 may start the database identification processing without determining whether or not the controller 200 is capable of supporting the database identification processing.

By not executing the service discovery shown in FIG. 4, reduction of communication volume and shortening of processing time can be achieved.

Note that there is a technology called Attribute caching for the purpose of reducing processing time required for the second and subsequent service discoveries and the like. In Attribute caching, a client caches a database acquired from a server by service discovery.

On the other hand, according to the database identification processing according to the present embodiment, since the list 118 of the main body apparatus 100 includes a plurality of databases which can include a database of a server for which service discovery has never been executed, the frequency with which service discovery is executed can be reduced. For example, in a case where the communication system 1 is applied to a game system and the like, if a business operator determines or grasps in advance the specifications of both the main body apparatus 100 and the controller 200, by including the grasped databases in the list 118, in many cases, it is not necessary to execute service discovery.

### [E. Modification]

Processing necessary in the above devices may be implemented by a processor executing a program, or a part or all of the processing may be implemented by a hard-wired circuit such as an ASIC (Application Specific Integrated Circuit) or an FPGA (Field Programmable Gate Array). For example, at least a part of processing necessary in the above communication apparatus may be handled by a wireless communication controller.

In this specification, the term "processor" encompasses a hard-wired circuit such as an ASIC and/or an FPGA in addition to a CPU, a GPU, and the like. Note that the hard-wired circuit may be an IC (Integrated Circuit) with a small circuit scale.

The configurations of the main body apparatus 100 and the controller 200 are examples, and they do not have to include a part of the configuration, or may include other configurations. For example, the main body apparatus 100 does not have to include the display 120.

In the above description, for convenience of description, the wireless communication controller is described as a configuration independent of the control unit, but the control unit may include at least a part of the wireless communication controller. A plurality of wireless communication controllers may be mounted on a single board. The hardware of the main body apparatus 100 and the controller 200 may be any implementation.

The type of device of the main body apparatus 100 is not limited. The main body apparatus 100 may be a game console, a general-purpose personal computer, a smartphone, or the like. The main body apparatus 100 does not have to execute a game application. Further, in the above description, the controller 200 capable of operating the main body apparatus 100 on which a game application is executed is an example of an external apparatus that communicates with the main body apparatus 100. The external apparatus may be, for example, a headset, a speaker, a display, a printer, and the like. Note that in the above description, the main body apparatus 100 may be a game controller and the like, and the controller 200 may be a game console and the like.

Although Bluetooth has been exemplified as a standard for wireless communication in the above disclosure, other standards may be used.

While certain example systems, methods, devices and apparatuses have been described herein, it is to be understood that the appended claims are not to be limited to the systems, methods, devices and apparatuses disclosed, but on the contrary, are intended to cover various modifications and equivalent arrangements included within the spirit and scope of the appended claims.

## Claims

1. A computer-implemented method comprising:
receiving (SQ12), at a main body apparatus (100) configured to wirelessly communicate with one or more external apparatuses (200) in accordance with BLE (Bluetooth Low Energy) and to hold in advance a list (118) comprising a plurality of GATT (Generic Attribute Profile) databases, first information from a first external apparatus (200) that has not communicated with the main body apparatus;
identifying (SQ20), at the main body apparatus, a GATT database corresponding to the first information from the plurality of GATT databases based on the first information; and
wirelessly communicating (102), at the main body apparatus, with the first external apparatus based on the identified GATT database.

2. The computer-implemented method according to claim 1, wherein:
the list comprises a plurality of types of GATT databases for at least one type of external apparatus.

3. The computer-implemented method according to claim 2, wherein:
the first information comprises a hash value calculated from a GATT database of the first external apparatus.

4. The computer-implemented method according to any of claims 1 to 3, wherein:
the list comprises one or more types of GATT databases for each of a plurality of types of external apparatuses.

5. The computer-implemented method according to any of claims 1 to 4, wherein:
the first external apparatus is a game controller.

6. The computer-implemented method according to any of claims 1 to 5, further comprising:
transmitting (SQ14) designation information for specifying a protocol for identifying a GATT database to the first external apparatus.

7. The computer-implemented method according to claim 6, wherein:
the first information is generated by the first external apparatus based on the designation information.

8. The computer-implemented method according to claim 7, further comprising:
acquiring (SQ12) information regarding at least one candidate for a protocol for identifying a GATT database from the first external apparatus; and
generating the designation information based on the acquired information.

9. The computer-implemented method according to claim 8, further comprising:
specifying a UUID (universally unique identifier) and requesting information on a characteristic included in a GATT database of the first external apparatus (SQ2).

10. The computer-implemented method according to claim 9, wherein:
the requesting the information on the characteristic is performed based on information included in an advertising packet transmitted by the first external apparatus.

11. The computer-implemented method according to any of claims 6 to 10, wherein:
the main body apparatus is configured to be capable of adding a new protocol while at least maintaining a protocol for identifying a GATT database held in advance.

12. The computer-implemented method according to any of claims 1 to 10, wherein:
the list comprises a plurality of types of GATT databases for each of a plurality of types of external apparatuses.

13. A main body apparatus configured to perform the computer-implemented method according to any of claims 1 to 12.

14. A program causing one or more computers to perform the computer-implemented method according to any of claims 1 to 12.

## Amended claims

### Amended claims in accordance with Rule 137(2) EPC.

1. A computer-implemented method comprising:
receiving (SQ12), at a main body apparatus (100) configured to wirelessly communicate with one or more external apparatuses (200) in accordance with BLE (Bluetooth Low Energy) and to hold in advance a list (118) comprising a plurality of GATT (Generic Attribute Profile) databases, first information from a first external apparatus (200) that has not communicated with the main body apparatus;
identifying (SQ20), at the main body apparatus, a GATT database corresponding to the first information from the plurality of GATT databases based on the first information; and
wirelessly communicating (102), at the main body apparatus, with the first external apparatus based on the identified GATT database,
**characterized in that**
the method further comprises:
transmitting (SQ14) designation information for specifying a protocol for identifying a GATT database to the first external apparatus.

2. The computer-implemented method according to claim 1, wherein:
the list comprises a plurality of types of GATT databases for at least one type of external apparatus.

3. The computer-implemented method according to claim 2, wherein:
the first information comprises a hash value calculated from a GATT database of the first external apparatus.

4. The computer-implemented method according to any of claims 1 to 3, wherein:
the list comprises one or more types of GATT databases for each of a plurality of types of external apparatuses.

5. The computer-implemented method according to any of claims 1 to 4, wherein:
the first external apparatus is a game controller.

6. The computer-implemented method according to any of claims 1 to 5, wherein:
the first information is generated by the first external apparatus based on the designation information.

7. The computer-implemented method according to claim 6, further comprising:
acquiring (SQ12) information regarding at least one candidate for a protocol for identifying a GATT database from the first external apparatus; and
generating the designation information based on the acquired information.

8. The computer-implemented method according to claim 7, further comprising:
specifying a UUID (universally unique identifier) and requesting information on a characteristic included in a GATT database of the first external apparatus (SQ2).

9. The computer-implemented method according to claim 8, wherein:
the requesting the information on the characteristic is performed based on information included in an advertising packet transmitted by the first external apparatus.

10. The computer-implemented method according to any of the preceding claims, wherein:
the main body apparatus is configured to be capable of adding a new protocol while at least maintaining a protocol for identifying a GATT database held in advance.

11. The computer-implemented method according to any of claims 1 to 9, wherein:
the list comprises a plurality of types of GATT databases for each of a plurality of types of external apparatuses.

12. A main body apparatus configured to perform the computer-implemented method according to any of claims 1 to 11.

13. A program comprising instructions which, when executed by one or more computers, cause the one of more computers to perform the computer-implemented method according to any of claims 1 to 11.
